# EUROPEAN PATENT SPECIFICATION

(11) **EP 1 794 988 B1**
(45) Date of publication and mention of the grant of the patent: **02.09.2009**
(21) Application number: 05735184.3
(22) Date of filing: 13.04.2005
(51) Int. Cl.: H04L 29/12, H04L 12/28, H04L 12/56, H04M 7/00, H04M 1/00, H04W 4/00

(54) **INITIATING INTERNET PROTOCOL (IP) COMMUNICATIONS IN AN IP COMMUNICATION SYSTEM BASED ON DATABASES OF CONTACT INFORMATION**
EINLEITUNG DER KOMMUNIKATION IM INTERNET-PROTOKOLL (IP) IN EINEM IP-KOMMUNIKATIONSSYSTEM AUF DER BASIS VON DATENBANKEN VON KONTAKTINFORMATIONEN
ETABLISSEMENT DE COMMUNICATIONS PAR PROTOCOLE INTERNET DANS UN SYSTEME DE COMMUNICATION IP FONDE SUR DES BASES DE DONNEES D'INFORMATIONS DE CONTACT

(30) Priority: 28.09.2004 US 952001
(43) Date of publication of application: 13.06.2007
(73) Proprietor: Sony Ericsson Mobile Communications AB, 221 88 Lund (SE)
(72) Inventor: BLOEBAUM, L. Scott, Cary, NC 27513 (US); HOMILLER, Daniel P., Cary, NC 27513 (US)
(74) Representative: Chamberlain, Alan James
(86) International application number: PCT/US2005/012362
(87) International publication number: WO 2006/036206

(56) References cited:
- EP-A- 1 211 861
- US-A1- 2002 156 895
- US-A1- 2003 065 786
- US-A1- 2004 127 214

## Description

### FIELD OF THE INVENTION

The present invention generally relates to the field of telephony, and more particularly to apparatus, methods, and computer program products for initiating Internet protocol communications in an internet protocol communication system.

### BACKGROUND OF THE INVENTION

The Internet has become a mainstream network for communicating not just data, such as email and pictures, but also for providing real-time bi-directional voice and video communications. Voice Over Internet Protocol (VoIP) is an industry standard that has evolved to enable users to place phone calls through the Internet, instead of through the Public Switched Telephone Network (PSTN). A conventional phone may now be connected to the Internet using an interface device that converts analog phone signals to digital signals that can be communicated as an Internet Protocol (IP) call through the Internet. A phone call may thereby be communicated through the Internet to a VoIP service provider, who may convert the call back to an analog signal and connect the call through the PSTN local to the called phone. A computer or IP phone can also be used to initiate and receive IP calls through a VoIP service provider. A user can thereby dial a telephone number and have the call routed through the Internet, instead of, or in addition to, the PSTN.

The present invention defines a method according to claim 1, a communication terminal according to claim 9 and a system according to claim 15. Specific embodiments are set forth in the dependent claims 2-8 and 10-14.

Document EP-A-1 211 861 discloses a method, wherein a user of a mobile phone uses the mobile phone to contact an address book on the Internet to find the telephone number of a person he wants to call and to initiate a telephone connection.

### SUMMARY OF THE INVENTION

### BRIEF DESCRIPTION OF THE DRAWINGS

Figure 1 is a block diagram of an IP communication system that includes a plurality of contact information databases according to various embodiments of the present invention.

Figure 2 is a block diagram of a communication terminal according to various embodiments of the present invention.

Figure 3 is a flow chart illustrating operations for accessing a plurality of contact information databases in an IP communication system according to various embodiments of the present invention.

### DETAILED DESCRIPTION OF THE INVENTION

The present invention now will be described more fully hereinafter with reference to the accompanying drawings, in which embodiments of the invention are shown. However, this invention should not be construed as limited to the embodiments set forth herein. Rather, these embodiments are provided so that this disclosure will be thorough and complete, and will fully convey the scope of the invention to those skilled in the art.

Like numbers refer to like elements throughout the description. It will be understood that, as used herein, the term "comprising" or "comprises" is openended, and includes one or more stated elements, steps and/or functions without precluding one or more unstated elements, steps and/or functions. As used herein the term "and/or" includes any and all combinations of one or more of the associated listed items.

Embodiments according to the present invention are described with reference to block diagrams and/or operational illustrations of communication terminals, methods, Internet Protocol systems, and computer program products. It is to be understood that each block of the block diagrams and/or operational illustrations, and combinations of blocks in the block diagrams and/or operational illustrations, can be implemented by radio frequency, analog and/or digital hardware, and/or program instructions. These program instructions may be provided to a controller, which may include one or more general purpose processors, special purpose processors, ASICs, and/or other programmable data processing apparatus, and which may reside within common or separate packaging. Accordingly, the instructions, which execute via the controller and/or other programmable data processing apparatus, create means for implementing the functions/acts specified in the block diagrams and/or operational block or blocks. In some alternate implementations, the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved.

It will be understood that, although the terms first, second, etc. may be used herein to describe various components, these components should not be limited by these terms. These terms are only used to distinguish one component from another component. Thus, a first component discussed below could be termed a second component without departing from the teachings of the present invention.

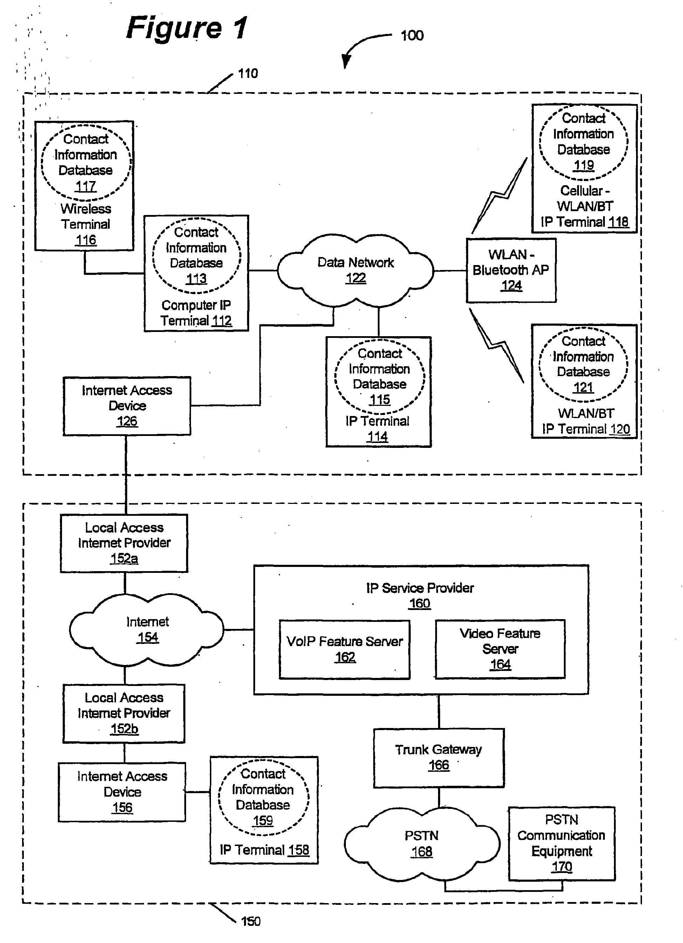

Figure 1 is a block diagram of an Internet Protocol (IP) communication system 100 according to various embodiments of the present invention. Local resources 110 of the IP communication system 100 include a computer IP terminal 112, an IP terminal 114, a wireless terminal 116, a cellular-wireless local area network (WLAN)/Bluetooth (ET) IP terminals 118, a WLAN/BT IP terminal 120, a data network 122, a WLAN/Bluetooth Access Point (AP), and an Internet access device 126. Other resources 150, which may be geographically distant from the local resources 110, include local access Internet providers 152a-b, Internet 154, an Internet access device 156, an IP terminal 158, an IP service provider 160 that can include a Voice-over-IP (VoIP) feature server 162 and a video feature server 164, a trunk gateway 166, a Public Switched Telephone Network (PSTN) 168, and PSTN communication equipment 170.

The IP terminals 112, 114, 118 and 120 can communicate with each other and the Internet access device 126 via the data network 122, which may be, for example, an Ethernet data network. The IP terminals 118 and 120 are configured to communicate through the WLAN-Bluetooth AP 124 using a WLAN and/or Bluetooth communication interface. Although the IP terminals 118 and 120 have been described as using a WLAN and/or Bluetooth communication interface for purposes of illustration, it is to be understood that the terminals 118 and 120 may communicate using any wireless communication protocol and interface in accordance with various embodiments of the present invention. The wireless terminal 116 is directly connected to the computer IP terminal 112, such as through a Universal Serial Bus (USB) connection, and may communicate through the computer IP terminal 112 and the data network 122.

The Internet access devices 126 and 156 may be, for example, a cable modem, a Digital Subscriber Line (DSL) modem, a WLAN connection, a dial-up modem, and/or a cellular data modem. The local access Internet providers 152a-b may be, for example, a local telephone company that provides access to the Internet 154 through a dial-up connection and/or through a DSL connection, a cable TV/communications company that provides a cable modem connection to the Internet 154, a WLAN AP hub operator, and/or a wireless operator that provides cellular data communications to the Internet 154 over a wireless interface.

The IP terminal 118 and the wireless terminal 116 are each configured to initiate cellular phone communications via one or more cellular protocols, which can include, but are not limited to, Advanced Mobile Phone Service (AMPS), ANSI-136, Global Standard for Mobile (GSM) communication, General Packet Radio Service (GPRS), enhanced data rates for GSM evolution (EDGE), code division multiple access (CDMA), wideband-CDMA, CDMA2000, and Universal Mobile Telecommunications System (UMTS). Communication protocols as used herein may specify the information communicated, the timing, the frequency, the modulation, and/or the operations for setting-up and/or maintaining a communication connection.

The terminals 112, 114, 116, 118, 120, and 158 are collectively referred to as communication terminals. As used herein, a "communication terminal" includes, but is not limited to, a terminal that is configured to receive and/or transmit communication signals through a wireline connection, such as through a data network, and/or through a wireless connection, such as through a cellular network, WLAN, a Bluetooth network, and/or another wireless communication network. Examples of communication terminals include, but are not limited to, phones, desktop computers, laptop computers, palmtop computers, and personal digital assistants that are configured to receive and/or transmit communication signals.

The IP terminals 112, 114, 118, 120, and 158 are configured to initiate, receive and establish an IP communication with another IP terminal, such as the IP terminal 158, and/or with PSTN communication equipment, such as the equipment 170, which may be a conventional Plain-Old-Telephone-System (POTS) phone. As used herein, an "IP communication" can include, but is not limited to, a VoIP phone call (e.g., full-duplex call, half-duplex call, push-to-talk call), video communication, and/or message communication (e.g., instant message, email) that is established through the Internet 154 to another communication device.

A subscriber may setup IP services by registering with the IP service provider 160 and being assigned one or more IP subscriber identifiers (e.g., IP telephone numbers). The IP service provider 160 can then route IP communications based on a destination identifier (e.g., the IP telephone number to which an IP phone call is directed).

For example, IP terminal 114 may initiate an IP communication to a destination identifier through the Internet access device 126, the local access internet provider 152a, and the Internet 154 to the IP service provider 160. The IP communication may be a VoIP call, which can be serviced by the VoIP feature server 162, and/or it may be a video communication, which can be serviced by the video feature server 164, or an email or other IP communication which can be serviced by another feature server in the IP service provider 160. The IP service provider 160, via the feature server(s) 162 and 164, can route the IP communication, based on the destination identifier, to another communication terminal, such as to the IP terminal 158 and/or the PSTN communication equipment 170. In particular, IP service provider 160 may route the IP communication through the Internet 154, the local access Internet provider 152b and the Internet access device 156 to the IP terminal 158, and/or it may route the IP communication through the trunk gateway 166 and the PSTN 168 to the PSTN communication equipment 170.

In a similar fashion, the IP terminal 114 may receive an IP communication that is initiated by one of the other IP terminals 112, 118, 120, and/or 158 and/or by the PSTN communication equipment 170, and which is serviced by the IP service provider 160.

A contact information database may be within one or more of the terminals 112, 114, 116, 118, 120, and 158. In the exemplary embodiment shown in Figure 1, each of the terminals 112, 114,116, 118, 120, and 158 includes within it a respective one of a plurality of contact information databases 113, 115, 117, 119, 121, and 159, which are illustrated with dashed lines to indicate that they may or may not be present in the illustrated terminal. The contact information database may include names and associated telephone numbers for individuals, business, or other entities. The contact information in one or more of databases 113, 115, 117, 119, 121, and 159 can be shared among one or more of the terminals 112, 114, 116, 118, 120, and 158, and can be used to make IP communications and/or may be associated with information received from an incoming IP communication. Accordingly, a terminal can access contact information that is locally within it, and it can access contact information via the data network 122 that is within another terminal or distributed among several other terminals.

For example, the IP terminal 114 can access contact information in the contact information database 115 within the IP terminal 114 along with contact information in the databases 113, 117, 119, 121, and/or 159, and can initiate an IP communication based on the accessed contact information. The IP terminal 114 may access the contact information database 117 via the computer IP terminal 112, which may serve as a communication interface to (information server for) the wireless terminal 116. The IP terminal 114 may access the contact information databases 119 and 121 via the WLAN-Bluetooth WP 124, and may access the contact information database 159 by transmitting a request (e.g., query) thereto through the Internet 154.

The IP terminal 114 can sense a contact information query by a user, and can then search the contact information in the local database 115 and the contact information in, for example, the remote databases 113, 117, 119, 121, and/or 159 to attempt to locate a telephone number that corresponds to the contact information query. If the search identifies corresponding contact information, at least a portion of that corresponding contact information may be displayed at the IP terminal 114 to the user. The user may then initiate an IP communication based on the displayed contact information.

A contact information query may correspond to a request for a group of contact information. For example, a plurality of IP telephone numbers may be associated with each of the IP terminals 112,114,118,120, and/or 158. Each of the IP telephone numbers (or other IP subscriber identifiers) may also be associated with defined groups of contact information. For example, one or more users of the IP terminal 114 may define and associate different groups of contact information with different ones of the associated IP telephone numbers. Accordingly, users of the IP terminal 114 may each develop their own customized listings of contact information and/or attributes that are used to search the databases 113,115,117,119,121, and/or 159 for contact information, and which are associated with different IP telephone numbers. The contact information query may then be an indication of for which of the different IP telephone numbers a query is to be performed. The IP telephone 114 may then obtain and display the associated list of contact information. A user may select among the displayed contact information to initiate an IP communication from the IP terminal 114 based thereon.

Incoming IP communications can include source identification information that identifiers a source of the communication (e.g., caller identification information, message source identification information). A destination one of the terminals 112, 114, 116, 118, 120, and/or 158 for an incoming IP communication may determine whether the source identification information corresponds to contact information in one or more of the databases 113, 115, 117, 119, 121, and 159. The destination terminal may search one or more of the databases 113, 115, 117, 119, 121, and 159 to attempt to identify contact information that corresponds to source identification information received with an incoming IP communication. Identified contact information may be loaded into the destination terminal, where it may be added to a local database of contact information, and/or it may be displayed.

The destination terminal may add at least a portion of the source identification information, a time of the incoming IP communication and/or a date of the incoming IP communication to one or more of the databases 113, 115, 117, 119, 121, and 159. For example, when source identification information of an incoming IP communication does not correspond to contact information in a database, at least a portion of it may be added as a contact information entry to one or more databases. By adding the time and/or date of incoming communications to one or more databases, a history can be maintained for communications that are associated with the contact information.

The destination terminal may generate an audible announcement that varies based on source identification information associated with an incoming IP communication. The destination terminal may determine whether, or what, contact information corresponds to the source identification information, and may vary its audible announcement by selecting among a plurality of audible announcements (e.g., verbal phrases, tones, songs, and/or other audible sequences), and/or by selectively playing or not playing an audible announcement based on the determination.

Although Figure 1 illustrates an exemplary IP communication system 100, it will be understood that the present invention is not limited to such a configuration, but is intended instead to encompass any configuration capable of carrying out the operations described herein. For example, although only a single IP service provider 160 has been shown for illustration purposes, it will be understood that the IP communication system 100 would generally route IP communications to/from thousands of IP subscribers through numerous Internet providers and trunk gateways.

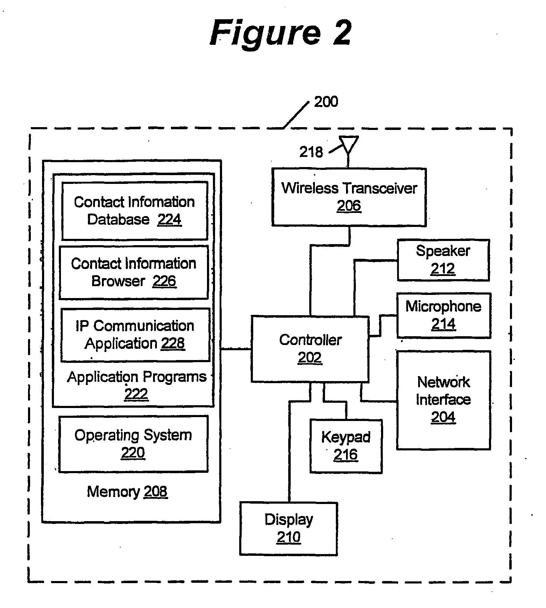

With reference now to Figure 2, a communication terminal 200 is shown that may be suitable for use as one or more of the terminals 112, 114, 116, 118, 120, and/or 158 of Figure 1 according to various embodiments of the present invention. The communication terminal 200 can include a controller 202 that communicates with a network interface 204, a wireless transceiver 206, a memory 208, a display 210, a speaker 212, a microphone 214, and a keypad 216 or other user input device. The network interface 204 can be configured to communicate data with the data network 122. The wireless transceiver 206 can be configured to communicate data through an antenna 218 over a wireless interface, such as with the WLAN-Bluetooth AP 124, and may be used to communicate with a cellular network. These components may be conventional components such as those used in many conventional communication terminals but which can be configured to operate as described herein.

The controller 202 can be any commercially available or custom microprocessor. The memory 208 is representative of the overall hierarchy of memory devices containing the software and data used to implement the functionality of the communication terminal 200. The memory 208 may include several categories of software and data used in the communication terminal 200: an operating system 220 and application programs 222. As will be appreciated by those of skill in the art, the operating system 220 may be any operating system suitable for operating a communication terminal, such a desktop computer, palmtop computer, and/or cellular mobile terminal, and may include, but not be limited to, Symbian, PaImOS, EPOC, Windows CE, Java, Windows95, Windows98, Windows2000 or WindowsXP, Unix or Linux.

The application programs 222 are illustrative of the programs that implement the various features of the communication terminal 200 and include at least one application which supports operations as described herein. The application programs 222 can include a contact information database 224, a contact information browser 226, and an IP communication application 228. The contact information database 224 may be any application that is suitable for organizing contact information in a searchable format, and may include, for example, an Outlook application or other sophisticated relational application, or an application that simply maintains an ordered list of contacts. Accordingly, the controller 202, through the contact information database 224, can be configured to store, search for, and output contact information based on contact information queries and source identification information in an incoming communication. The controller 202, through the contact information database 224, may also be configured to synchronize at least some of the contact information in the contact information database 224 with one or more databases in other communication terminals.

The controller 202, through the contact information browser 226, can be configured to initiate a search of the local contact information database 224 and/or remote database(s) of contact information through the network interface 204 and/or the wireless transceiver 206. For example, the browser 226 may display for a user, through the display 210, a list of communication terminals that are available to be searched for contact information. The browser 226 may then selectively search the available communication terminals based on a user's selection and based on other search attributes that may be defined by a user (i.e., a contact information query). The list of available communication terminals may be developed based on a service discovery mechanism, such as based on a Session Initiation Protocol (SIP). For example, communication terminals may register with the browser 226, or with another communication terminal, which operates as a presence server, upon connection to the network 122 (Figure 1). A communication terminal may register by, for example, sending a message to the presence server via a conventional protocol, such as using Session Initiation Protocol (SIP) Session for Instant Messaging and Presence Leveraging Extensions (SIMPLE). The browser 226 or other communication terminal may then publish a list of available communication terminals to the other connected communication terminals.

The controller 202, through the IP communication application 228, can be configured to initiate and receive IP communications with other communication terminals, where the IP communications may include, for example, VoIP calls and video communications as described above.

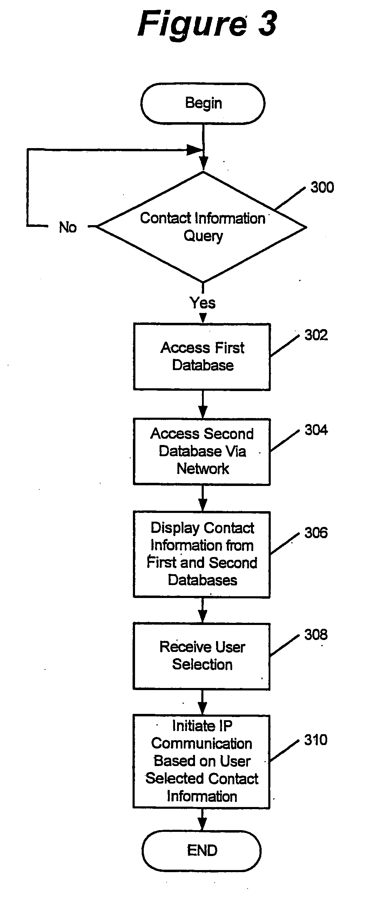

Figure 3 is a flow chart illustrating operations for accessing contact information from a first communication terminal in an IP communication system, such as from one of the IP terminals 112, 114, 118, 120, and 158 shown in Figure 1. At Block 300, a contact information query is sensed. At Block 302, a first database of contact information within the first communication terminal is accessed, which may include searching the first database based on information from a user and/or obtaining a portion of, or a defined group of, the contact information. At Block 304, a second database of contact information, which may be within a second communication terminal, is accessed via a network. Access of the second database may include searching the second database based on information from a user and obtaining a portion of, or a defined group of, the contact information. Access of one of the first and second databases may be selectively performed based on the results of the search of the other one of the first and second databases.

At Block 306, contact information from the first and/or second databases is displayed to a user. The displayed contact information may be, for example, be one or more contact information entries that satisfy a defined search criteria. At Block 308, a user selection is received, and which may correspond to a selection of a contact information among a plurality of displayed contact information. At Block 310, an IP communication is initiated based on the user selected contact information.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. A method of initiating an Internet Protocol, IP, communication in an IP communication system, the method comprising:
accessing at a first communication terminal a first database of contact information that is within the first communication terminal;
accessing, via the first communication terminal, a second database of contact information that is separate from the first communication terminal and communicatively connected to the first communication terminal by a network;
initiating an IP communication from the first communication terminal based on contact information accessed in at least one of the first and second databases; and
receiving incoming IP communications at the first communication terminal, wherein at least some of the incoming IP communications include source identification information; and
**characterised by** the step of
determining whether the source identification information corresponds to contact information in the second database.

2. The method of Claim 1, further comprising:
displaying at the first communication terminal at least a portion of the contact information accessed from the second database;
sensing at the first communication terminal a contact information query from a user that identifies a requested group of contact information, wherein contact information associated with the requested group of contact information is obtained from the second database responsive to the contact information query; and
sensing a user selection among the obtained contact information associated with the requested group of contact information, and wherein initiating IP communications from the first communication terminal comprises initiating an IP communication based on the user selected contact information.

3. The method of Claim 1, wherein accessing, via the first communication terminal, a second database of contact information comprises accessing the contact information in the second database through a wireless access point.

4. The method of Claim 1, further comprising generating an audible announcement at the first communication terminal that varies based on the determination of whether the source identification information received with one of the incoming IP communication corresponds to contact information in the second database.

5. The method of Claim 1, further comprising displaying at the first communication terminal contact information from the second database based on the determination of whether the source identification information received with one of the incoming IP communication corresponds to contact information in the second database.

6. The method of Claim 1, further comprising:
selecting among a plurality of audible announcements based on the determination of whether the source identification information received with one of the incoming IP communication corresponds to contact information in the second database; and
generating the selected audible announcement at the first communication terminal.

7. The method of Claim 1, further comprising adding at least a portion of the source identification information to the second database of contact information.

8. The method of Claim 1, further comprising adding at least one of time of the incoming IP communication and date of the incoming IP communication to the second database of contact information.

9. An IP communication terminal comprising:
a first database of contact information; and
a controller configured to access contact information in the first database, to access through a network contact information in a second database that is separate from the first communication terminal, to initiate IP communications based on contact information accessed in at least one of the first and second databases, to receive incoming IP communications, to identify source identification information associated with at least some of the incoming IP communications, **characterised by** said controller being configured to obtain contact information from the second database based on the source identification information.

10. The communication terminal of Claim 9, further comprising a display, wherein the controller is configured to provide at least a portion of the contact information from the second database to the display and to receive an indication of a user selection of displayed contact information, and to initiate an IP communication based on the user selected contact information.

11. The communication terminal of Claim 9, wherein the controller is configured to select among a plurality of audible announcements based on the obtained contact information, and to generate the selected audible announcement.

12. The communication terminal of Claim 9, wherein the controller is configured to add at least a portion of the source identification information to the second database.

13. The communication terminal of Claim 9, wherein the controller is configured to add at least one of time of the incoming IP communication and date of the incoming IP communication to the second database.

14. The communication terminal of Claim 9, further comprising a display, wherein the controller is configured to provide at least a portion of the obtained contact information to the display.

15. An Internet Protocol, IP, communication system comprising:
a data network;
a plurality of communication terminals, wherein at least one of the communication terminals comprises a local database of contact information within the communication terminal and is configured to access contact information in the local database, to access contact information in a remote database through the data network, said remote database being separate from the communication terminal, to initiate an IP communication through an Internet to an IP service provider based on the contact information accessed in at least one of the local database and the remote database, to receive incoming IP communications, to identify source identification information associated with at least some of the incoming IP communications, **characterised by** said at least one of the communication terminals being configured to obtain contact information from the remote database based on the source identification information.

## Patentansprüche

1. Verfahren eines Initiierens einer Internetprotokoll-, IP-Kommunikation in einem IP-Kommunikationssystem, wobei das Verfahren umfasst:
Zugreifen an einem ersten Kommunikationsendgerät auf eine erste Datenbank einer Kontaktinformation, die innerhalb des ersten Kommunikationsendgerätes liegt;
Zugreifen über das erste Kommunikationsendgerät auf eine zweite Datenbank einer Kontaktinformation, die getrennt von dem ersten Kommunikationsendgerät ist und kommunikativ mit dem ersten Kommunikationsendgerät über ein Netzwerk verbunden ist;
Initiieren einer IP-Kommunikation von dem ersten Kommunikationsendgerät basierend auf Kontaktinformation, auf die in zumindest einer der ersten und zweiten Datenbank zugegriffen wird; und
Empfangen eingehender IP-Kommunikationen an dem ersten Kommunikationsendgerät,
wobei zumindest einige der eingehenden IP-Kommunikationen Quell-Identifikationsinformationen einschließen; und
**gekennzeichnet durch** den Schritt
Bestimmen, ob die Quell-Identifikationsinformation einer Kontaktinformation in der zweiten Datenbank entspricht.

2. Verfahren nach Anspruch 1, weiter mit:
Anzeigen an dem ersten Kommunikationsendgerät zumindest eines Teiles der Kontaktinformation, auf die von der zweiten Datenbank zugegriffen wird;
Abtasten an dem ersten Kommunikationsendgerät einer Kontaktinformationsabfrage von einem Benutzer, die eine angeforderte Gruppe von Kontaktinformation identifiziert, wobei eine Kontaktinformation, die mit der angeforderten Gruppe von Kontaktinformation verknüpft ist, aus der zweiten Datenbank in Reaktion auf die Kontaktinformationsabfrage erhalten wird; und
Abtasten einer Benutzerauswahl aus der erhaltenen Kontaktinformation, die mit der angeforderten Gruppe von Kontaktinformation verknüpft ist, und wobei ein Initiieren von IP-Kommunikationen von dem ersten Kommunikationsendgerät ein Initiieren einer IP-Kommunikation basierend auf der Benutzer-ausgewählten Kontaktinformation umfasst.

3. Verfahren nach Anspruch 1, wobei ein Zugreifen über das erste Kommunikationsendgerät auf eine zweite Datenbank einer Kontaktinformation ein Zugreifen auf die Kontaktinformation in der zweiten Datenbank über einen drahtlosen Zugangspunkt umfasst.

4. Verfahren nach Anspruch 1, weiter mit einem Erzeugen einer hörbaren Ankündigung an dem ersten Kommunikationsendgerät, die sich basierend auf der Bestimmung ändert, ob die Quellidentifikationsinformation, die mit einer der eingehenden IP-Kommunikation empfangen wird, einer Kontaktinformation in der zweiten Datenbank entspricht.

5. Verfahren nach Anspruch 1, weiter mit einem Anzeigen an dem ersten Kommunikationsendgerät von Kontaktinformation von der zweiten Datenbank basierend auf der Bestimmung, ob die Quell-Identifikationsinformation, die mit einer der eingehenden IP-Kommunikation empfangen wird, an der Kontaktinformation in der zweiten Datenbank entspricht.

6. Verfahren nach Anspruch 1, weiter mit:
Auswählen aus einer Vielzahl von hörbaren Ankündigungen basierend auf der Bestimmung, ob die Quell-Identifikationsinformation, die mit einer der eingehenden IP-Kommunikation empfangen wird, einer Kontaktinformation in der zweiten Datenbank entspricht; und
Erzeugen der ausgewählten hörbaren Ankündigung an dem ersten Kommunikationsendgerät.

7. Verfahren nach Anspruch 1, weiter mit einem Hinzufügen zumindest eines Teiles der Quell-Identifikationsinformation zu der zweiten Datenbank einer Kontaktinformation.

8. Verfahren nach Anspruch 1, weiter mit einem Hinzufügen zumindest eines einer Zeit der eingehenden IP-Kommunikation und eines Datums der eingehenden IP-Kommunikation zu der zweiten Datenbank einer Kontaktinformation.

9. IP-Kommunikationsendgerät, mit:
einer ersten Datenbank einer Kontaktinformation; und
einem Steuergerät, das konfiguriert ist, auf Kontaktinformation in der ersten Datenbank zuzugreifen, über ein Netzwerk auf Kontaktinformation in einer zweiten Datenbank zuzugreifen, die getrennt von dem ersten Kommunikationsendgerät ist, IP-Kommunikationen basierend auf Kontaktinformation zu initiieren, auf die in zumindest einer der ersten und zweiten Datenbank zugegriffen wird, eingehende IP-Kommunikationen zu empfangen, Quell-Identifikationsinformation zu identifizieren, die mit zumindest einigen der eingehenden IP-Kommunikationen verknüpft ist,
**dadurch gekennzeichnet, dass** das Steuergerät konfiguriert ist, Kontaktinformation aus der zweiten Datenbank basierend auf der Quell-Identifikationsinformation zu erhalten.

10. Kommunikationsendgerät nach Anspruch 9, weiter mit einer Anzeige, wobei das Steuergerät konfiguriert ist, zumindest einen Teil der Kontaktinformation von der zweiten Datenbank an die Anzeige bereitzustellen und eine Anzeige einer Benutzerauswahl von angezeigter Kontaktinformation zu empfangen und eine IP-Kommunikation basierend auf der Benutzer-ausgewählten Kontaktinformation zu initiieren.

11. Kommunikationsendgerät nach Anspruch 9, wobei das Steuergerät konfiguriert ist, aus einer Vielzahl von hörbaren Ankündigungen basierend auf der erhaltenen Kontaktinformation auszuwählen und die ausgewählte hörbare Ankündigung zu erzeugen.

12. Kommunikationsendgerät nach Anspruch 9, wobei das Steuergerät konfiguriert ist, zumindest einen Teil der Quell-Identifikationsinformation zu der zweiten Datenbank hinzuzufügen.

13. Kommunikationsendgerät nach Anspruch 9, wobei das Steuergerät konfiguriert ist, zumindest eines einer Zeit der eingehenden IP-Kommunikation und eines Datums der eingehenden IP-Kommunikation zu der zweiten Datenbank hinzuzufügen.

14. Kommunikationsendgerät nach Anspruch 9, weiter mit einer Anzeige, wobei das Steuergerät konfiguriert ist, zumindest einen Teil der erhaltenen Kontaktinformation an die Anzeige bereitzustellen.

15. Internet-Protokoll-, IP-Kommunikationssystem, mit:
einem Datennetzwerk;
einer Vielzahl von Kommunikationsendgeräten, wobei zumindest eines der Kommunikationsendgeräte eine lokale Datenbank einer Kontaktinformation innerhalb des Kommunikationsendgerätes umfasst und konfiguriert ist, auf Kontaktinformation in der lokalen Datenbank zuzugreifen, auf Kontaktinformation in einer Ferndatenbank über das Datennetzwerk zuzugreifen, wobei die Ferndatenbank getrennt von dem Kommunikationsendgerät ist, eine IP-Kommunikation über ein Internet an einen IP-Dienstanbieter basierend auf der Kontaktinformation zu initiieren, auf die in zumindest einer der lokalen Datenbank und der Ferndatenbank zugegriffen wird, eingehende IP-Kommunikationen zu empfangen, Quell-Identifikationsinformation zu identifizieren, die mit zumindest einigen der eingehenden IP-Kommunikationen verknüpft ist, **dadurch gekennzeichnet, dass** zumindest eines der Kommunikationsendgeräte konfiguriert ist, Kontaktinformation aus der Ferndatenbank basierend auf der Quell-Identifikationsinformation zu erhalten.

## Revendications

1. Procédé de lancement d'une communication selon le protocole internet, IP, dans un système de communication IP, le procédé comprenant les étapes consistant à :
accéder sur un premier terminal de communication à une première base de données d'informations de contacts qui se situe au sein du premier terminal de communication ;
accéder, à l'aide du premier terminal de communication, à une seconde base de données d'informations de contacts, qui est séparée du premier terminal de communication et qui est connectée et communique avec le premier terminal de communication par un réseau ;
lancer une communication IP à partir du premier terminal de communication sur la base des informations de contacts consultées dans au moins l'une des première et seconde bases de données ; et
recevoir des communications IP entrantes sur le premier terminal de communication, dans lequel au moins certaines des communications IP entrantes comprennent des informations d'identification de l'origine ; et
**caractérisé par** l'étape consistant à déterminer si les informations d'identification de l'origine correspondent à des informations de contacts dans la seconde base de données.

2. Procédé selon la revendication 1, comprenant en outre les étapes consistant à :
afficher sur le premier terminal de communication au moins une partie des informations de contacts consultées dans la seconde base de données ;
détecter sur le premier terminal de communication une demande d'informations de contacts provenant d'un utilisateur, qui identifie un groupe demandé d'informations de contacts, dans lequel les informations de contacts associées au groupe demandé d'informations de contacts sont obtenues de la seconde base de données en réponse à la demande d'informations de contacts ; et
détecter une sélection par l'utilisateur, parmi les informations de contact obtenues qui sont associées au groupe demandé d'informations de contacts ; et
dans lequel l'étape de lancement des communications IP à partir du premier terminal de communication comprend l'étape consistant à lancer une communication IP sur la base des informations de contacts sélectionnées par l'utilisateur.

3. Procédé selon la revendication 1, dans lequel l'étape d'accès à une seconde base de données d'informations de contacts, à l'aide du premier terminal de communication, comprend l'étape consistant à accéder aux informations de contacts dans la seconde base de données via un point d'accès sans fil.

4. Procédé selon la revendication 1, comprenant en outre l'étape consistant à produire une annonce audible sur le premier terminal de communication qui varie en fonction du fait qu'il a été déterminé si les informations d'identification de l'origine reçues avec une des communications IP entrantes correspondent à des informations de contacts dans la seconde base de données.

5. Procédé selon la revendication 1, comprenant en outre l'étape consistant à afficher sur le premier terminal de communication des informations de contacts provenant de la seconde base de données en fonction du fait qu'il a été déterminé si les informations d'identification de l'origine reçues avec une des communications IP entrantes correspondent à des informations de contacts dans la seconde base de données.

6. Procédé selon la revendication 1, comprenant en outre les étapes consistant à :
sélectionner dans une pluralité d'annonces audibles en fonction du fait qu'il a été déterminé si les informations d'identification de l'origine reçues avec une des communications IP entrantes correspondent à des informations de contacts dans la seconde base de données ; et
produire l'annonce audible sélectionnée sur le premier terminal de communication.

7. Procédé selon la revendication 1, comprenant en outre l'étape consistant à ajouter au moins une portion des informations d'identification de l'origine à la seconde base de données d'informations de contacts.

8. Procédé selon la revendication 1, comprenant en outre l'étape consistant à ajouter au moins soit l'heure de la communication IP entrante soit la date de la communication IP entrante à la seconde base de données d'informations de contacts.

9. Terminal de communication IP comprenant :
une première base de données d'informations de contacts ; et
un contrôleur configuré pour accéder aux informations de contacts de la première base de données, pour accéder via un réseau à des informations de contacts dans une seconde base de données qui est séparée du premier terminal de communication, pour lancer une communication IP sur la base d'informations de contacts consultées dans au moins l'une des première et seconde bases de données, pour recevoir des communications IP entrantes, pour identifier des informations d'identification de l'origine associées à au moins certaines des communications IP entrantes ;
**caractérisé en ce que** ledit contrôleur est configuré pour obtenir des informations de contacts de la seconde base de données sur la base des informations d'identification de l'origine.

10. Terminal de communication selon la revendication 9, comprenant en outre un écran d'affichage, dans lequel le contrôleur est configuré pour fournir à l'écran d'affichage au moins une partie des informations de contacts provenant de la seconde base de données, pour recevoir une indication d'une sélection par l'utilisateur dans les informations de contacts affichées et pour lancer une communication IP sur la base des informations de contacts sélectionnées par l'utilisateur.

11. Terminal de communication selon la revendication 9, dans lequel le contrôleur est configuré pour opérer une sélection parmi une pluralité d'annonces audibles, sur la base des informations de contacts obtenues, et pour produire l'annonce audible sélectionnée.

12. Terminal de communication selon la revendication 9, dans lequel le contrôleur est configuré pour ajouter au moins une partie des informations d'identification de l'origine à la seconde base de données.

13. Terminal de communication selon la revendication 9, dans lequel le contrôleur est configuré pour ajouter au moins soit une heure de la communication IP entrante soit une date de la communication IP entrante à la seconde base de données.

14. Terminal de communication selon la revendication 9, comprenant en outre un écran d'affichage, dans lequel le contrôleur est configuré pour fournir à l'écran d'affichage au moins une partie des informations de contacts obtenues.

15. Système de communication IP comprenant :
un réseau de données ;
une pluralité de terminaux de communication, dans lequel au moins l'un des terminaux de communication comprend une base de données locale d'informations de contacts au sein du terminal de communication et est configuré pour accéder à des informations de contacts dans la base de données locale, pour accéder à des informations de contacts dans une base de données distante, ladite base de données distante étant séparée du terminal de communication, pour lancer une communication IP avec un fournisseur de services IP, via un internet, sur la base des informations de contacts consultées dans au moins l'une des bases de données locale et distante, pour recevoir des communications IP entrantes, pour identifier des informations d'identification de l'origine associées à au moins certaines des communications IP entrantes ;
**caractérisé en ce qu'**au moins l'un des terminaux de communication est configuré pour obtenir des informations de contacts de la base de données distante sur la base des informations d'identification de l'origine.
